# DEMANDE DE BREVET EUROPEEN

(11) **EP 1 499 054 A2**
(43) Date de publication de la demande: **19.01.2005**
(21) Numéro de dépôt: 04291589.2
(22) Date de dépôt: 23.06.2004
(51) Int. Cl.: H04J 14/02

(54) **Procédé pour déterminer une route spectrale dans un réseau de télécommunication optique**

(30) Priorité: 11.07.2003 FR 0308521
(71) Demandeur: ALCATEL, 75008 Paris (FR)
(72) Inventeur: Laalaoua, Rachid, 91600 Savigny sur Orge (FR)
(74) Mandataire: Fournier, Michel Robert Marie

(57) **Abrégé**

Pour déterminer une route spectrale entre un noeud de départ (N1) et un noeud d'arrivée (N6) dans un réseau de télécommunication optique à multiplexage en longueurs d'onde WDM, le procédé comporte une étape de détermination d'une route spatiale reliant le noeud de départ au noeud d'arrivée, ladite route spatiale comportant une suite de segments de route (Li), chaque segment de route reliant directement deux noeuds du réseau et pouvant supporter au moins une longueur d'onde.

Le procédé comprend ensuite les étapes :
- d'identification des longueurs d'onde utilisables le long de chacun des segments de route,
- de construction d'un graphe dans lequel les sommets (i, fₖ, λₗ) sont les longueurs d'onde utilisables dans des segments de route et les arcs joignant chacun deux sommets consécutifs sont les transitions entre les longueurs d'onde représentées respectivement par ces sommets consécutifs.

Chacun des arcs est affecté d'une distance correspondant à un coût déterminé de transition de longueurs d'onde, et on détermine enfin le plus court chemin de ce graphe par un algorithme de détermination de plus court chemin.

## Description

La présente invention concerne un procédé pour déterminer une route spectrale, dans un réseau de télécommunication optique. Elle concerne plus particulièrement les réseaux optiques à multiplexage par division en longueurs d'onde WDM (Wavelength Division Multiplexing) qui utilisent une pluralité de longueurs d'onde pour transmettre simultanément plusieurs flots de données sur une même fibre optique.

Les télécommunications connaissent un développement important. De plus en plus d'utilisateurs (particuliers et entreprises) transmettent un nombre croissant de messages dans les réseaux de télécommunication. En outre, ces messages comportent une quantité de plus en plus élevée d'informations, par exemple lors de l'envoi d'images. Pour répondre à cette demande grandissante en débit d'informations, les opérateurs des réseaux de télécommunication utilisent la transmission optique des signaux. Cette transmission utilise la modulation, suivant l'information à transmettre, de signaux optiques, en général produits par des lasers, puis la propagation de ces signaux modulés dans un réseau à conducteurs ou fibres optiques.

La transmission optique des signaux comporte plusieurs avantages. En particulier, les atténuations du signal lors de la transmission sont moindres que dans le cas de signaux électriques et les fibres optiques ont une résistance mécanique plus élevée pour un poids plus faible que leurs équivalents électriques. Mais les principaux avantages sont la large bande passante des fibres optiques et la possibilité de faire transiter simultanément plusieurs porteuses de longueurs d'onde distinctes dans une même fibre. Cette dernière technique, dite du multiplexage en longueur d'onde, permet d'atteindre des débits d'information de l'ordre du Gigabits/s et même du Térabits/s.

Pour établir une connexion dans un réseau de télécommunication optique, il faut déterminer non seulement une route spatiale constituée d'une suite de segments de route reliant le noeud de départ au noeud d'arrivée, mais il faut déterminer en outre une route spectrale, puisque chaque segment peut supporter une pluralité de longueurs d'ondes constituant chacune un segment de route spectrale. Choisir une route spectrale consiste à choisir la longueur d'onde, ou les longueurs d'onde, à utiliser successivement sur différents segments, le long de la route spatiale.

De manière connue, plusieurs algorithmes permettent d'affecter une longueur d'onde à un segment spatial. De tels algorithmes sont notamment décrits dans le document "Wavelength Converters in Dynamically Reconfigurable WDM Networks" (Yates, J. M. , M et M. P. Rumsewicz, IEEE Communications Surveys).

Une première solution consiste à utiliser un algorithme d'affectation de la première longueur d'onde disponible (« First-Fit wavelength evaluation » en anglais).

Une deuxième solution consiste à utiliser un algorithme d'affectation de la longueur d'onde la plus utilisée (« Most-used wavelength evaluation » en anglais). La décision est prise en fonction des statistiques de réseau sur l'utilisation des longueurs d'onde. Cette deuxième solution a pour but d'optimiser l'utilisation des longueurs d'onde en remplissant les parties non utilisées des longueurs d'onde les plus utilisées.

La mise en oeuvre des solutions mentionnées ci-dessus présente cependant certaines difficultés dans la mesure où elles ne sont pas adaptées pour des réseaux optiques partiellement transparents (i.e. pas de régénération par conversion de longueur d'onde sur certains noeuds du réseau) ; ces solutions supposent en effet que la conversion de longueur d'onde est possible sur chacun des noeuds du réseau (i.e. noeuds du réseau opaques).

En outre, l'algorithme d'affectation de la longueur d'onde la plus utilisée impose une mise à jour de la connaissance globale de l'état du réseau, induisant dès lors un surcoût important.

La présente invention vise à fournir un procédé pour déterminer une route spectrale dans un réseau de télécommunication optique susceptible d'être mis en oeuvre à bas coût, à la fois sur les réseaux optiques du type transparent et/ou opaque, et permettant un paramétrage et donc une certaine flexibilité pour les utilisateurs.

La présente invention propose à cet effet un procédé pour déterminer une route spectrale, dans un réseau de télécommunication optique, entre un noeud de départ et un noeud d'arrivée appartenant audit réseau, comportant une étape de détermination, par un procédé de routage classique, d'une route spatiale reliant ledit noeud de départ audit noeud d'arrivée, ladite route spatiale comportant une suite de segments de route, chaque segment de route reliant directement deux noeuds dudit réseau et pouvant supporter au moins une longueur d'onde ou une bande de longueurs d'onde, ledit procédé étant caractérisé en ce qu'il comprend les étapes ultérieures suivantes :
- identification des longueurs d'onde ou bandes de longueurs d'onde (λ1-λ3) utilisables le long de chacun desdits segments de route de ladite route spatiale,
- construction d'un graphe composé de sommets et d'arcs joignant des sommets deux à deux, dans lequel :
   o chaque sommet ([i, fₖ, λₗ]) est associé à un desdits segments de route et représente une longueur d'onde ou bande de longueurs d'onde utilisable le long de ce segment de route associé,
   o chaque arc est associé à un desdits noeuds de ladite route spatiale et joint deux sommets consécutifs associés respectivement à des segments de route consécutifs reliés entre eux par ledit noeud associé, et représente une transition d'une première longueur d'onde ou bande de longueurs d'onde vers une seconde longueur d'onde ou bande de longueurs d'onde représentées respectivement par lesdits sommets consécutifs, ladite transition correspondant à une conversion de longueur d'onde exécutable par ledit noeud associé, chacun desdits arcs étant affecté d'une distance correspondant à un coût attribué à ladite transition,
- détermination du plus court chemin de ce graphe par un algorithme de détermination de plus court chemin.

Grâce à l'invention, la détermination de la route spectrale est réalisée à partir d'une pondération par les coûts. Chaque coût peut être fixé de manière flexible par l'utilisateur qui peut ainsi privilégier un choix par rapport à un autre. Le procédé selon l'invention est applicable aux réseaux optiques du type transparent et/ou opaque dans la mesure où un coût infini peut être associé à une transition impossible entre deux longueurs d'onde différentes passant par un noeud transparent.

Il convient de noter que l'algorithme porte sur un graphe qui représente uniquement une route spatiale particulière, et non pas l'ensemble du réseau comme dans certaines méthodes connues. Il en résulte une grande simplification de l'algorithme, ce qui rend plus facile, voire possible, la flexibilité mentionnée ci-dessus.

Notons que le procédé selon l'invention s'applique aux deux types de granularité que sont la granularité associée à la commutation par longueur d'onde ou la granularité associée à la commutation par bande de longueur d'onde. Par soucis de clarté, nous ferons référence dans la suite uniquement au routage de longueurs d'onde.

Avantageusement, un coût initial est attribuable à chacun des sommets, et lorsqu'un segment de route peut être équipé de plusieurs fibres optiques, on prévoit au moins un sommet associé à ce segment auquel on attribue un coût initial correspondant à une mise en service d'une fibre additionnelle dans ledit segment, le coût de transition attribué à tout arc issus dudit sommet incluant alors ledit coût initial. Ce coût initial permet de prendre en compte la possibilité de mises en service d'un nombre variable de fibres optiques dans une partie ou la totalité des segments de route.

Selon un mode de réalisation particulièrement avantageux, ledit algorithme de détermination de plus court chemin est un algorithme de Viterbi. En effet le graphe proposé est particulièrement bien adapté à cet algorithme, ce qui n'est pas le cas avec d'autre types de graphes, notamment ceux où les sommets et les arcs représentent respectivement des noeuds et des segments de route du réseau.

Plusieurs types d'algorithme de plus court chemin peuvent néanmoins être utilisés, tels que l'algorithme de Dijkstra. Toutefois, l'algorithme de Dijkstra peut s'avérer relativement complexe et lent lorsque le nombre de noeuds devient élevé. L'utilisation du graphe selon l'invention permet d'utiliser avantageusement l'algorithme de Viterbi plus rapide et utilisé dans le décodage des codes convolutionnels (décodage correcteur d'erreurs). L'algorithme de Viterbi revient à chercher le chemin qui est le plus favorable, c'est-à-dire le plus court par rapport à la métrique définie et donc qui correspond au coût le plus faible. Le graphe selon l'invention se présente sous la forme de colonnes regroupant chacune les sommets associés à un même segment de route. L'algorithme consiste à examiner les colonnes du graphe une par une en sommant le coût du passage de chaque sommet d'une colonne à chaque sommet de la colonne suivante pour obtenir un coût total. Pour chaque sommet du graphe, on repère le sommet de la colonne précédente qui implique le coût total minimal et on mémorise ce coût minimal ainsi que l'identité du sommet précédent permettant d'obtenir ce coût minimal. A la fin du graphe (la dernière colonne), une fois qu'on a trouvé le sommet qui correspond au coût total minimum, il suffit de suivre le graphe dans l'autre sens, en passant par les sommets mémorisés, pour déterminer le chemin le plus court.

Avantageusement, ledit coût de transition remplit l'une des conditions suivantes :
- le coût de transition est infini lorsque ladite transition n'est pas possible,
- le coût de transition inclut un coût de conversion de longueur d'onde,
- le coût de transition inclut un coût de transit sur un noeud transparent.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente un graphe pour la mise en oeuvre du procédé selon l'invention,
- La figure 2 représente un exemple de mise en oeuvre du procédé selon l'invention.

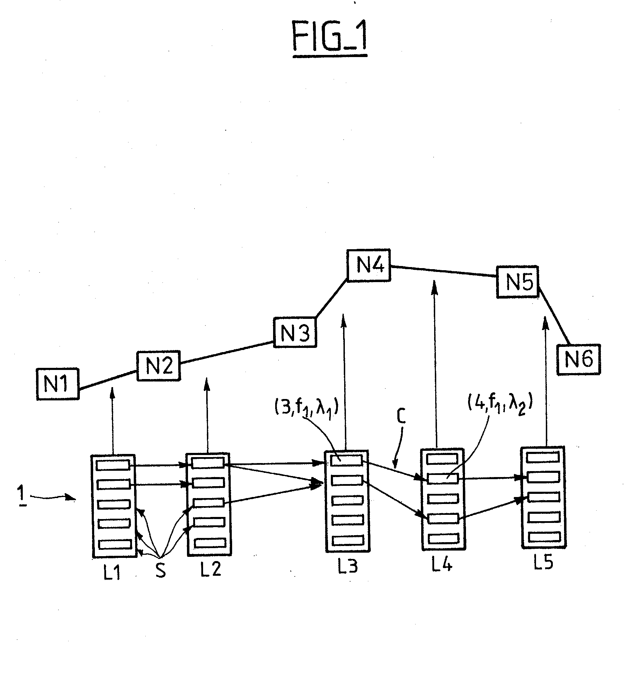

La figure 1 représente un graphe 1 pour la détermination d'une route spectrale dans un réseau de télécommunication optique entre un noeud de départ N1 et un noeud d'arrivée N6 appartenant au réseau.

A la réception d'une requête d'établissement de connexion, la route spatiale entre le noeud N1 et le noeud N6 est déterminée de façon connue par un algorithme de routage classique tel que l'algorithme de Dijkstra. Rappelons que l'algorithme de Dijkstra consiste à tenir à jour un ensemble E de noeuds dont la distance la plus courte au noeud de départ est déjà connue. Initialement, cet ensemble ne contient que le noeud de départ lui-même. A chaque pas de l'algorithme, un noeud supplémentaire est rajouté dans cet ensemble, jusqu'à ce qu'il contienne le noeud d'arrivée.

La route spatiale ainsi déterminée comporte six noeuds N1 à N6 connectés entre eux par des liaisons ou segments de routes L1 à L5.

Les liaisons L1 à L5 vont permettre de construire les sommets S du graphe 1. Chaque liaison Li (i variant de 1 à 5) comporte en effet nᵢ fibres optiques, chacune des nᵢ fibres optiques j (j variant de 1 à nᵢ) pouvant comporter nᵢⱼ longueurs d'onde. Par soucis de clarté, chaque liaison L1 à L5 a été représentée comme ayant cinq longueurs d'onde disponibles pouvant être réparties sur une ou plusieurs fibres optiques.

Ainsi, chaque sommet S représente une longueur d'onde utilisable dans une des fibres de la liaison associée à ce sommet. En d'autre termes, chaque sommet S est identifiable par un triplet (i, fₖ, λₗ,), i désignant le numéro de la liaison, fₖ désignant la kième (k variant de 1 à nᵢ) fibre de la liaison i et λₗ, désignant la lième longueur d'onde (l variant de 1 à nᵢⱼ) dans la fibre fₖ. A titre d'exemple, les sommets (3, f₁, λ₁) (i.e. troisième liaison, première fibre de la troisième liaison, première longueur d'onde de la première fibre de la troisième liaison) et (4, f1, λ₂) (i.e. quatrième liaison, première fibre de la quatrième liaison, deuxième longueur d'onde de la première fibre de la quatrième liaison) sont représentés sur la figure 1.

A chaque transition entre deux sommets (i, fₖ, λ₁) et (i+1, f_{k'} , λ_{1'}) est associé un coût de transition C([i,fₖ,λₗ]→ [i+1,f_{k'} ,λ_{l'}]) prédéterminé. Ainsi, le coût de transition C représenté en figure 1 désigne le coût C([3,f₁,λₗ]→ [4,f₁,λ₂]). Les arcs sont les transitions entre les longueurs d'onde disponibles de deux sommets consécutifs et chaque arc est affecté d'un coût de transition. Notons que seules quelques transitions ont été représentées par des flèches pour illustrer le procédé selon l'invention. Dans la pratique, une transition peut exister pour chaque couple de sommets associés respectivement à une liaison et à la liaison suivante.

Chaque coût de transition peut par exemple être déterminé par les conditions suivantes :
- le coût de transition est infini lorsque ladite transition n'est pas possible (cas d'un noeud transparent et d'une transition entre deux longueurs d'onde différentes),
- le coût de transition inclut le coût de conversion de longueur d'onde (cas d'une régénération par conversion de longueur d'onde par un noeud de type opaque),
- le coût de transition inclut le coût de transit sur un noeud transparent (la transition d'une longueur d'onde à une même longueur d'onde peut en effet également induire des coûts supplémentaires).

Notons ici que ces coûts sont définis par l'utilisateur qui peut ainsi mettre l'accent sur l'un de ces coûts plus que sur les autres et utiliser le coût comme un paramètre de pondération lui assurant une certaine flexibilité.

En particulier, lorsque certaines liaisons (ou segments de route) peuvent être équipées de plusieurs fibres optiques, on peut être amené à mettre en service un nombre plus ou moins grand de fibres optiques pour pouvoir assurer des transitions sans conflits de longueurs d'onde. Pour prendre en compte cette possibilité, on peut introduire un coût initial attribuable à chacun des sommets du graphe. Pour chacune de ces liaisons, on prévoira au moins un sommet associé auquel on attribue alors un coût initial correspondant à une mise en service d'une fibre additionnelle dans cette liaison. Le coût de transition attribué à tout arc issu d'un tel sommet inclura alors le coût initial. En d'autre termes, le coût de transition sera la somme du coût initial et des autres coûts à prendre en compte dans la transition considérée, tels que la conversion de longueur d'onde.

Une fois le graphe construit, il reste à déterminer le plus court chemin spectral pour passer du noeud de départ N1 au noeud d'arrivée N6 en considérant que les distances du graphe sont constituées par les coûts précédemment cités.

L'utilisation de l'algorithme de Viterbi se prête particulièrement bien à la détermination de ce chemin le plus court. Cet algorithme connu est décrit dans les documents "Principles of digital communications and coding ", (A. J. Viterbi, J. K. Omura, McGraw-Hill, 1979) et "The Viterbi algorithm" (G. D. Fomey, Proceeding of the IEEE, vol 61, no. 3, pp. 268-278, March 1973).

Le principe de l'algorithme de Viterbi est le suivant :

On part des sommets associés à la liaison L1. On trace tous les arcs possibles à partir de ces sommets vers les sommets de la liaison L2, chaque arc ayant un coût associé. Pour chaque sommet de la liaison L2, on détermine l'arc provenant des sommets de L1 ayant le coût le plus bas. Ce coût est affecté au sommet de L2 correspondant et le triplet (l, fₖ, λₗ) correspondant au sommet de L1 associé à ce plus bas coût est mémorisé pour le sommet de L2. Ainsi, chaque sommet de L2 est associé à un coût minimum et à un triplet de L1 correspondant.

Cette opération est répétée pour les arcs correspondant aux transitions des sommets de L2 vers les sommets de L3, en prenant en considération les coûts minima et éventuellement initiaux des sommets de L2. Ainsi, pour chaque arc, on effectue la somme du coût de la transition et du coût minimum du sommet de départ de L2, le coût de la transition incluant éventuellement un coût initial du sommet de départ. A nouveau, chaque sommet de L3 comporte un coût minimum et un triplet de L2 associés.

L'opération est répétée jusqu'à la liaison L5 pour laquelle chaque sommet possède donc un coût et un triplet de L4. On détermine alors le sommet de L5 ayant le coût le plus bas.

Comme pour chaque sommet on mémorise le triplet de la liaison précédente correspondant au coût minimum, il suffit alors de remonter du sommet de L5 au sommet de L1 pour avoir le chemin spectral recherché.

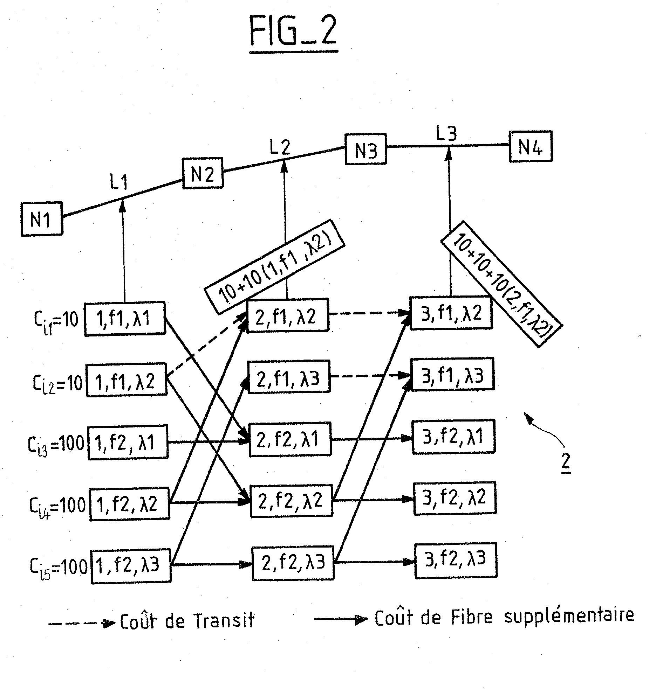

La figure 2 représente un exemple de mise en oeuvre du procédé selon l'invention.

Cet exemple fait suite à une demande de connexion entre un noeud N1 et un noeud N4 du réseau. Le chemin spatial calculé par l'algorithme de Dijkstra est défini par le chemin N1, N2, N3 et N4. Ainsi, trois segments de route L1 à L3 sont définis.

Considérons une première fibre f₁ et une fibre supplémentaire rajoutée f₂.

Supposons d'autre part que les noeuds N2 et N3 ne permettent pas la conversion de longueur d'onde et que la capacité de chacune des fibres est limitée à 3 longueurs d'onde λ₁, λ₂ et λ₃.

L'ensemble des longueurs d'ondes utilisables sur les liaisons est :
- L1 = {λ₁ sur fibre 1, λ₂ sur fibre 1} + les trois longueurs d'onde de la fibre supplémentaire.
- L2 = {λ₂ sur fibre 1, λ₃ sur fibre 1} + les trois longueurs d'onde de la fibre supplémentaire.
- L3 = λ₂ sur fibre 1, λ₃ sur fibre 1} + les trois longueurs d'onde de la fibre supplémentaire.

Les coûts des transitions sont les suivants :
- Coût Fibre Supplémentaire = 100 (représenté par une flèche continue)
- Coût Transit = 10 (représenté par une flèche en pointillé).

En outre, un coût initial Cᵢ₁ à Cᵢ₅ est associé à chacun des sommets du premier segment de route et correspond au coût de la transition entre le noeud de départ N1 et chacun des sommets du premier segment de route.

L'algorithme de Viterbi détermine alors les éléments suivants :
- le sommet (2,f₁,λ₂) de la liaison L2 a un coût minimum de « 10+10 » et le sommet précédent mémorisé est le sommet (l,f₁,λ₂) de la liaison L1.
- le sommet (3,f₁,λ₂) dispose d'un coût minimum « 10+10+10 » et le sommet précédent mémorisé est le sommet (2,f₁,λ₂) de la liaison L2.

L'algorithme de Viterbi permet donc de définir le chemin spectral comme suit :
- (1,f₁,λ₂) : λ₂ sur la fibre 1 pour la liaison L1.
- (2,f₁,λ₂) : λ₂ sur la fibre 1 pour la liaison L2.
- (3,f₁,λ₂) : λ₂ sur la fibre 1 pour la liaison L3.

Bien entendu, l'invention n'est pas limitée au mode de réalisation qui vient d'être décrit.

Notamment, l'invention a été décrite dans le cas de sélection de longueurs d'onde mais on peut également envisager un routage par bande de longueurs d'onde.

## Revendications

1. Procédé pour déterminer une route spectrale, dans un réseau de télécommunication optique, entre un noeud de départ (N1) et un noeud d'arrivée (N6) appartenant audit réseau, comportant une étape de détermination, par un procédé de routage classique, d'une route spatiale reliant ledit noeud de départ (N1) audit noeud d'arrivée (N6), ladite route spatiale comportant une suite de segments de route (L1-L5), chaque segment de route reliant directement deux noeuds dudit réseau et pouvant supporter au moins une longueur d'onde ou une bande de longueurs d'onde, ledit procédé étant **caractérisé en ce qu'**il comprend les étapes ultérieures suivantes :
- identification des longueurs d'onde ou bandes de longueurs d'onde (λ1-λ3) utilisables le long de chacun desdits segments de route de ladite route spatiale,
- construction d'un graphe composé de sommets et d'arcs joignant des sommets deux à deux, dans lequel :
o chaque sommet ([i, fₖ, λₗ]) est associé à un desdits segments de route et représente une longueur d'onde ou bande de longueurs d'onde utilisable le long de ce segment de route associé,
o chaque arc est associé à un desdits noeuds de ladite route spatiale et joint deux sommets consécutifs associés respectivement à des segments de route consécutifs reliés entre eux par ledit noeud associé, et représente une transition d'une première longueur d'onde ou bande de longueurs d'onde vers une seconde longueur d'onde ou bande de longueurs d'onde représentées respectivement par lesdits sommets consécutifs, ladite transition correspondant à une conversion de longueur d'onde exécutable par ledit noeud associé, chacun desdits arcs étant affecté d'une distance correspondant à un coût attribué à ladite transition,
- détermination du plus court chemin de ce graphe par un algorithme de détermination de plus court chemin.

2. Procédé selon la revendication précédente, **caractérisé en ce qu'**un coût initial est attribuable à chacun des sommets, et **en ce que** lorsqu'un segment de route peut être équipé de plusieurs fibres optiques, on prévoit au moins un sommet associé à ce segment auquel on attribue un coût initial correspondant à une mise en service d'une fibre additionnelle dans ledit segment, le coût de transition attribué à tout arc issus dudit sommet incluant alors ledit coût initial.

3. Procédé selon l'une des revendications précédentes, **caractérisé en ce que** ledit algorithme de détermination de plus court chemin est un algorithme de Viterbi.

4. Procédé selon l'une des revendications précédentes, **caractérisé en ce que** ledit coût remplit l'une des conditions suivantes :
- ledit coût de transition est infini lorsque ladite transition n'est pas possible,
- ledit coût de transition inclut un coût de conversion de longueur d'onde,
- ledit coût de transition inclut un coût de transit sur un noeud transparent.
